# EUROPEAN PATENT APPLICATION

(11) **EP 4 429 129 A1**
(43) Date of publication of application: **11.09.2024**
(21) Application number: 22913645.2
(22) Date of filing: 12.10.2022
(51) Int. Cl.: H04B 10/25, H04B 10/50, H04W 12/06

(54) **REGISTRATION SIGNAL SENDING AND RECEIVING METHODS, OPTICAL TRANSMISSION DEVICE, OPTICAL RECEPTION DEVICE AND SYSTEM**

(30) Priority: 28.12.2021 CN 202111621070
(71) Applicant: Huawei Technologies Co., Ltd., Shenzhen, Guangdong 518129 (CN)
(72) Inventor: HE, Jiale, Shenzhen, Guangdong 518129 (CN)
(74) Representative: Thun, Clemens
(86) International application number: PCT/CN2022/124830
(87) International publication number: WO 2023/124381

(57) **Abstract**

This application discloses a registration signal sending and reception method, an optical transmission apparatus, an optical reception apparatus, and a system. The registration signal sending method includes: generating registration information, and loading, by using a transmission enable port, the registration information into a spontaneous-emission optical signal generated by a laser, to generate a registration signal; and sending the registration signal, where the registration signal is an optical signal carrying the registration information. The registration information is loaded into the laser by using the transmission enable port, to generate the registration signal, so as to prevent a silence window from being opened in a registration process, thereby reducing uplink delay jitter, and achieving low-cost transmission of a registration signal.

## Description

This application claims priority to Chinese Patent Application No. 202111621070.5, filed with the China National Intellectual Property Administration on December 28, 2021 and entitled "REGISTRATION SIGNAL SENDING AND RECEPTION METHOD, OPTICAL TRANSMISSION APPARATUS, OPTICAL RECEPTION APPARATUS, AND SYSTEM", which is incorporated herein by reference in its entirety.

### TECHNICAL FIELD

This application relates to the field of optical communications, and in particular, to a registration signal sending and reception method, an optical transmission apparatus, an optical reception apparatus, and a system.

### BACKGROUND

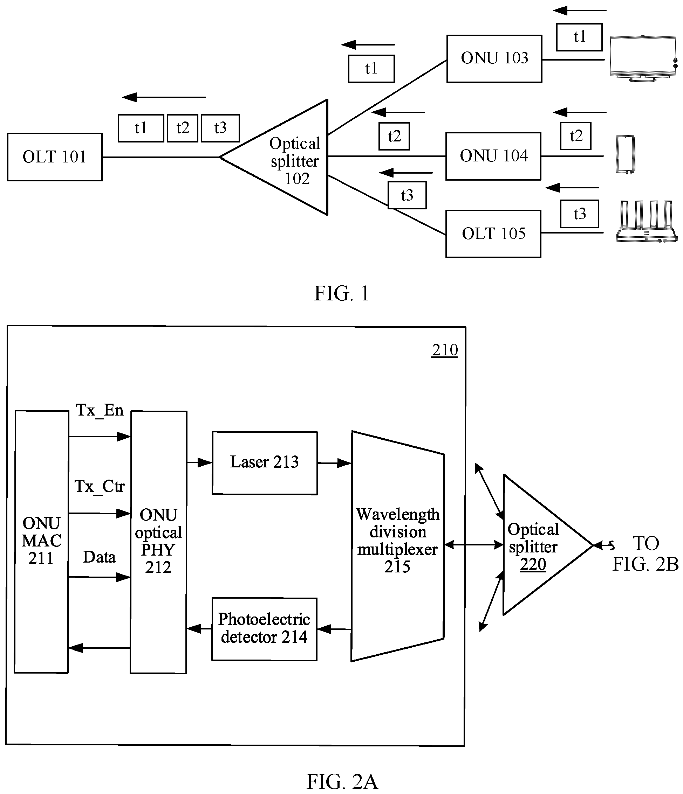

Typical application of a point-to-multipoint optical transmission system based on a time division multiple access (time division multiple access, TDMA) technology is a passive optical network (passive optical network, PON). FIG. 1 is a diagram of an architecture of a PON system in the conventional technology. As shown in FIG. 1, the PON system may include an OLT 101, an optical splitter 102, and a plurality of ONUs 103 to 105. Downlink transmission from the OLT 101 to the ONUs 103 to 105 uses a broadcast manner, and uplink transmission from the ONUs 103 to 105 to the OLT 101 uses a TDMA optical transmission technology. In an uplink transmission direction, different ONUs occupy different slots to transmit services to the OLT. For example, the ONU 101 occupies a slot t1, the ONU 102 occupies a slot t2, and the ONU 103 occupies a slot t3. Slots occupied by different ONUs cannot overlap. Otherwise, severe interference occurs, and consequently information in an overlapping part cannot be correctly received by the OLT. In uplink transmission of the PON system, when a new ONU goes online, the OLT needs to open a silence window (for example, open a silence window of 250 µs when a maximum distance from the OLT to the ONU is 20 km), and interrupts services of other ONUs in a time period of the silence window, so that the new online ONU completes processes such as registration and ranging. In this ONU registration solution, the silence window needs to be periodically opened, causing delay jitter. This poses a challenge on the PON system in an application scenario with a high delay jitter requirement. Therefore, in a point-to-point optical transmission system (for example, the PON), uplink delay jitter caused by a registration process needs to be reduced.

### SUMMARY

The present invention provides a registration signal sending and reception method, an optical transmission apparatus, an optical reception apparatus, and a system, to prevent a silence window from being opened in a registration process, thereby reducing uplink delay jitter caused by the registration process.

According to a first aspect, an embodiment of this application provides a registration signal sending method. The method may be performed by an optical transmission apparatus (such as an ONU), and includes the following steps: The optical transmission apparatus generates registration information, and loads, by using a transmission enable port, the registration information into a spontaneous-emission optical signal generated by a laser, to generate a registration signal. Then, the optical transmission apparatus sends the registration signal, where the registration signal is an optical signal carrying the registration information.

In the technical solution provided in this embodiment of this application, the registration information is loaded, by using the transmission enable port, into the spontaneous-emission optical signal generated by the laser, and power of the registration signal is lower than power of a service signal, thereby avoiding impact of the registration signal on the service signal when the silence window is not opened. In addition, the silence window does not need to be opened in the registration process, thereby avoiding uplink delay jitter caused by the registration process.

In a possible implementation, the method further includes: setting a bias current of the laser to be less than a threshold current, so that the laser generates a spontaneous-emission optical signal, where the threshold current is a preset current value.

The bias current of the laser is set to less than the threshold current, so that the laser generates a spontaneous-emission optical signal. In this way, the power of the registration signal is lower than that of the service signal, so that it is convenient for a receiving end to separate the registration signal from the service signal.

In a possible implementation, the method further includes: setting a modulation current of the laser to zero.

Setting the modulation current of the laser to zero can prevent the modulation current from being superimposed on the laser, so that output optical power of the laser fluctuates.

In a possible implementation, the loading, by using a transmission enable port, the registration information into a spontaneous-emission optical signal generated by a laser includes: controlling enabling and disabling of the laser based on the registration information by using the transmission enable port, so that the registration information is loaded into the spontaneous-emission optical signal generated by the laser.

The registration information is sent to a driver of the laser by using the transmission enable port, and the driver of the laser may generate an enable/disable signal based on an amplitude (for example, power) of transmit power of the registration information, to control enabling and disabling of the laser.

In a possible implementation, the registration information includes a first bit and a second bit in binary; and when the registration information includes the first bit, the laser is controlled to be enabled by using the transmission enable port; or when the registration information includes the second bit, the laser is controlled to be disabled by using the transmission enable port.

When the registration information is represented by using binary bits, enabling and disabling of the laser may be respectively controlled based on bit 1 and bit 0, to load the registration information into an optical signal generated by the laser.

In a possible implementation, power of the registration signal is lower than power of a service signal.

According to a second aspect, an embodiment of this application provides a registration signal reception method. The method may be performed by an optical reception apparatus (such as an OLT), and includes the following steps: The optical reception apparatus receives an optical signal, where the optical signal carries registration information, and the registration information is loaded, by using a transmission enable port, into a spontaneous-emission optical signal generated by a first laser. Then, the optical reception apparatus performs optical-to-electrical conversion on the optical signal to obtain the registration information.

In the technical solution provided in this embodiment of this application, the registration information is loaded, by using the transmission enable port, into the spontaneous-emission optical signal generated by the laser, so that a registration signal can be received at low costs, and a delay jitter problem caused by opening the silence window is avoided.

In a possible implementation, the optical signal further carries service data, and the service data is loaded, by using a data port, into a stimulated-emission optical signal generated by a second laser.

The optical signal received by the optical reception apparatus may include a registration signal (an optical signal carrying registration information) of an ONU (for example, an ONU 1 or the first laser) that is in a to-be-registered and to-go-online stage, and may further include a service signal (an optical signal carrying service data) of an ONU (for example, an ONU 2 or the second laser) that is in an online state. The registration signal and the service signal are optical signals with different power, so that it is convenient for the optical reception apparatus to separate the two signals.

In a possible implementation, after the performing optical-to-electrical conversion on the optical signal, the method further includes: obtaining an electrical signal, where the electrical signal includes the registration information and the service data; and extracting the registration information from the electrical signal.

The optical reception apparatus may extract the registration information based on a feature of the registration information (for example, power of the registration signal is lower than power of the service signal).

In a possible implementation, power of the optical signal carrying the registration information is lower than power of the optical signal carrying the service data.

According to a third aspect, an embodiment of this application provides an optical transmission apparatus. The apparatus includes: a processor, configured to: generate registration information, and load, by using a transmission enable port, the registration information into a spontaneous-emission optical signal generated by a laser, to generate a registration signal; and a laser, configured to send the registration signal, where the registration signal is an optical signal carrying the registration information.

The processor may be an ONU media access control (media access control, MAC) chip, and is configured to: generate the registration information, and send the registration information to a driver by using the transmission enable port. The driver may be an ONU optical physical layer (physical layer, PHY) chip, and is configured to: control the laser based on the registration information, and load the registration information into a spontaneous-emission optical signal generated by the laser. The ONU optical PHY and the laser may be implemented by using different chips, or may be implemented on a same chip. The processor may load the registration information into the spontaneous-emission optical signal generated by the laser by sending the registration information to the driver of the laser. For beneficial effects of the third aspect or any possible implementation of the third aspect, refer to descriptions of the first aspect or any possible implementation of the first aspect.

In a possible implementation, the processor is further configured to set a bias current of the laser to less than a threshold current, so that the laser generates a spontaneous-emission optical signal, where the threshold current is a preset current value. The processor may set the bias current of the laser by using the driver of the laser.

In a possible implementation, the processor is further configured to set a modulation current of the laser to zero. The processor may set the modulation current of the laser by using the driver of the laser. The processor may set the bias current of the laser by using the driver of the laser.

In a possible implementation, the apparatus further includes a driver, and the driver is configured to control enabling and disabling of the laser based on the registration information, so that the registration information is loaded into the spontaneous-emission optical signal generated by the laser. The driver obtains the registration information from the transmission enable port of the processor, and generates an enable/disable signal based on the registration information, to control enabling and disabling of the laser.

In a possible implementation, the registration information includes a first bit and a second bit in binary, and the driver is configured to: when the registration information includes the first bit, control the laser to be enabled; or when the registration information includes the second bit, control the laser to be disabled.

In a possible implementation, power of the registration signal is lower than power of a service signal.

According to a fourth aspect, an embodiment of this application provides an optical reception apparatus. The apparatus includes: an interface, configured to receive an optical signal, where the optical signal carries registration information, and the registration information is loaded, by using a transmission enable port, into a spontaneous-emission optical signal generated by a first laser; and an optical-to-electrical converter, configured to perform optical-to-electrical conversion on the optical signal to obtain the registration information. For beneficial effects of the fourth aspect or any possible implementation of the fourth aspect, refer to descriptions of the second aspect or any possible implementation of the second aspect.

In a possible implementation, the optical signal further carries service data, and the service data is loaded, by using a data port, into a stimulated-emission optical signal generated by a second laser.

In a possible implementation, after the optical-to-electrical conversion is performed on the optical signal, the apparatus further includes a signal processor, where the signal processor is configured to: obtain an electrical signal, where the electrical signal includes the registration information and the service data; and extract the registration information from the electrical signal.

In a possible implementation, power of the optical signal carrying the registration information is lower than power of the optical signal carrying the service data.

According to a fifth aspect, an embodiment of this application provides a registration signal sending apparatus. The apparatus includes: a generation unit, configured to: generate registration information, and load, by using a transmission enable port, the registration information into a spontaneous-emission optical signal generated by a laser, to generate a registration signal; and a sending unit, configured to send the registration signal, where the registration signal is an optical signal carrying the registration information.

For beneficial effects of the fifth aspect or any possible implementation of the fifth aspect, refer to descriptions of the first aspect or any possible implementation of the first aspect.

In a possible implementation, the apparatus further includes: a first setting unit, configured to set a bias current of the laser to less than a threshold current, so that the laser generates a spontaneous-emission optical signal, where the threshold current is a preset current value.

In a possible implementation, the apparatus further includes: a second setting unit, configured to set a modulation current of the laser to zero.

In a possible implementation, the generation unit is configured to control enabling and disabling of the laser based on the registration information by using the transmission enable port, so that the registration information is loaded into the spontaneous-emission optical signal generated by the laser.

In a possible implementation, the registration information includes a first bit and a second bit in binary, and the generation unit is configured to: when the registration information includes the first bit, control the laser to be enabled by using the transmission enable port; or when the registration information includes the second bit, control the laser to be disabled by using the transmission enable port.

In a possible implementation, power of the registration signal is lower than power of a service signal.

According to a sixth aspect, an embodiment of this application provides an optical communication system. The optical communication system includes a plurality of optical transmission apparatuses according to the first aspect or any possible implementation of the first aspect, and the optical reception apparatus according to the second aspect or any possible implementation of the second aspect.

According to a seventh aspect, an embodiment of this application provides an optical chip. The optical chip is configured to: generate registration information, and load, by using a transmission enable port, the registration information into a spontaneous-emission optical signal generated by a laser, to generate a registration signal. The registration signal is an optical signal carrying the registration information.

The optical chip is further configured to perform the solution in any possible implementation of the first aspect.

### BRIEF DESCRIPTION OF DRAWINGS

The following describes in more details embodiments of this application with reference to the accompanying drawings.
FIG. 1 is a schematic diagram of an architecture of a PON system in the conventional technology;
FIG. 2A and FIG. 2B are a schematic diagram of an architecture of a PON system according to an embodiment of this application;
FIG. 3 is an example flowchart of a PON system registration method according to an embodiment of this application;
FIG. 4 is an example flowchart of an ONU registration method according to an embodiment of this application;
FIG. 5 is a schematic diagram of a relationship curve between a bias current and optical power of a laser according to an embodiment of this application;
FIG. 6 is a schematic diagram of a waveform of ONU registration information according to an embodiment of this application;
FIG. 7 is an example flowchart of an OLT registration method according to an embodiment of this application;
FIG. 8 is a schematic diagram of signal superimposing of registration information and service data according to an embodiment of this application;
FIG. 9 is a schematic diagram of a logical structure of an oDSP according to this application;
FIG. 10 is a schematic diagram of a structure of an OLT according to an embodiment of this application; and
FIG. 11 is a schematic diagram of a structure of another OLT according to an embodiment of this application.

### DESCRIPTION OF EMBODIMENTS

A device form and a service scenario that are described in embodiments of this application are intended to describe technical solutions in embodiments of the present invention more clearly, and do not constitute any limitation on the technical solutions provided in embodiments of the present invention. A person of ordinary skill in the art may learn that, as the device form evolves and a new service scenario appears, the technical solutions provided in embodiments of this application are also applicable to resolving a similar technical problem.

It should be noted that the terms "first", "second", and the like in this application are intended to distinguish between similar objects but do not necessarily indicate a specific order or sequence. It should be understood that such data used in such a way is interchangeable in an appropriate circumstance, so that embodiments described herein can be implemented in an order not described in this application. The term "and/or" is used to describe an association relationship between associated objects, indicating that there are three types of relationships. For example, A and/or B may represent the following three cases: Only A exists, both A and B exist, and only B exists. A specific operation method in a method embodiment may also be applied to an apparatus embodiment. On the contrary, function descriptions of a component in the apparatus embodiment are also applicable to related descriptions in the method embodiment.

This application may be applied to scenarios such as a PON, a passive optical local area network (passive optical LAN, POL), an industrial optical network, an in-vehicle optical network, and the Internet of Things. For example, in the PON scenario, an optical transmission apparatus may be located in a user home or a user corridor, and an optical reception apparatus may be located in an equipment room of an operator. An optical transmission apparatus and an optical reception apparatus in the POL scenario may be located in a campus (such as an enterprise or a school campus). In the industrial optical network scenario, an optical transmission apparatus and an optical reception apparatus may be located in an industrial manufacturing workshop. An optical transmission apparatus and an optical reception apparatus in the in-vehicle optical network scenario may be disposed in a vehicle. In an example, in the PON scenario, the optical transmission apparatus may be an optical network unit (optical network unit, ONU) or an optical network terminal (optical network terminal, ONT), and the optical reception apparatus may be an optical line terminal (optical line terminal, OLT). In the in-vehicle optical network scenario, the optical transmission apparatus may be a vehicle interface unit (vehicle interface unit, VIU), and the optical reception apparatus is a mobile data center (MDC), a vehicle dynamic control (vehicle dynamic control, VDC), or a cockpit data center (cockpit data center, CDC). The technical solutions provided in this application are further applicable to an optical backbone transmission network, optical transmission in a data center, short-distance optical interconnection, wireless service fronthaul/backhaul, and the like. Specifically, the technical solutions provided in this application may be applied to optical transmission apparatuses and/or optical reception apparatuses corresponding to the foregoing different networks.

The PON is used as an example for description. Embodiments of this application may be applied to a time division multiplexing passive optical network (time division multiplexing passive optical network, TDM-PON), or may be applied to a wavelength division multiplexing passive optical network (WDM-PON). In this embodiment of this application, an optical module of the ONU reduces a bias current of a laser, reduces light emitting power of the laser, and sends an ONU uplink registration signal by using a transmission enable port of the laser. The OLT does not need to open a silence window. The OLT receives a registration signal of an ONU in a registration and going online stage and a service signal of another online ONU at the same time. Limited by a physical characteristic of the laser, enabling of the laser needs specific time (for example, 25.6 ns). Therefore, a frequency of controlling enabling and disabling of the laser by using the transmission enable port is low (generally at the highest level of MHz). Therefore, a registration signal loaded by using the transmission enable port is a low-rate signal. In addition, the ONU reduces the bias current of the laser, and loads the registration signal into a low-power optical signal (for example, a spontaneous-emission optical signal mentioned in the following embodiment). Therefore, the registration signal is a low-power signal. Generally, power of the registration signal is lower than optical power of service signals received by the OLT from all ONUs, for example, 15 dB lower than minimum power of a service signal received by the OLT. Therefore, in comparison with the service signal, the registration signal has features of low rate and low power. The OLT may separate the registration signal from the service signal, and restore the two signals at the same time.

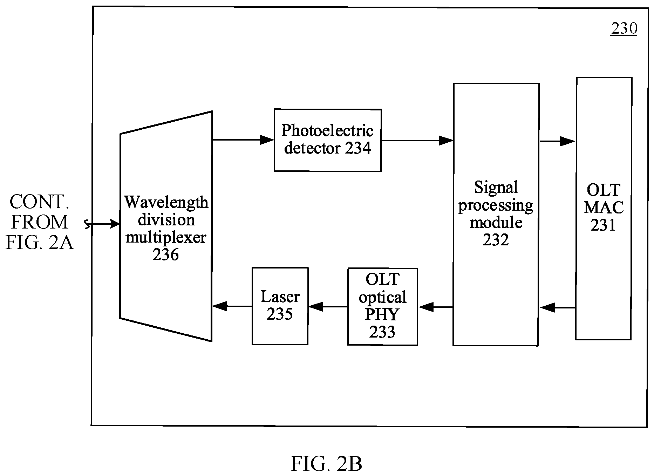

FIG. 2A and FIG. 2B are a schematic diagram of an architecture of a PON system according to an embodiment of this application. As shown in FIG. 2A and FIG. 2B, a plurality of ONUs 210 (only one is shown in the figure) communicate with an OLT 230 by using an optical splitter 220.

The ONU 210 may include an ONU media access control (media access control, MAC) 211, an ONU optical physical layer (physical layer, PHY) 212, a laser 213, and a photoelectric detector 214. In a sending direction, the ONU MAC 211 may control enabling and disabling of the laser 213 by using a transmission enable port (Tx_En, also referred to as a switch pin). For example, if a current moment is within a light-emitting slot (or referred to as an occupied slot) of the ONU 210, the ONU MAC 211 controls the laser 213 to be enabled by using the transmission enable port; or if the current moment is not within the light-emitting slot of the ONU 210, the ONU MAC 211 controls the laser 213 to be disabled by using the transmission enable port. The ONU MAC 211 may further adjust a physical parameter, for example, a bias current and a modulation current of the laser, of the laser 213 by using a transmission control port (Tx_Ctr). The ONU MAC 211 may send service data to the ONU optical PHY 212 by using a data port (Data), and the ONU optical PHY 212 transparently transmits the service data. The ONU optical PHY 212 is also referred to as a driver of the laser 213, and is configured to drive, based on an instruction of the transmission enable port and/or the transmission control port of the ONU MAC 211, the laser to generate an optical signal. The laser 213 modulates the service data into the optical signal under control of the ONU optical PHY 212, and sends, to the OLT 230 through an optical fiber, an uplink optical signal carrying the service data. In a receiving direction, the photoelectric detector 214 receives a downlink optical signal from the OLT 230, and converts the downlink optical signal into an electrical signal. The ONU optical PHY 212 transparently transmits the electrical signal. The ONU MAC 211 parses the electrical signal to obtain the service data. The ONU 210 may further include a wavelength division multiplexer 215, configured to: send an uplink optical signal generated by the laser 213 to an optical fiber, and send a downlink optical signal received from the optical fiber to the photoelectric detector 214.

The OLT 230 may include OLT MAC 231, a signal processing module 232, an OLT optical PHY 233, a photoelectric detector 234, and a laser 235. In a receiving direction, the photoelectric detector 234 receives an uplink optical signal from the ONU 210, and converts the uplink optical signal into an electrical signal. The electrical signal may be an analog electrical signal or a digital electrical signal. The signal processing module 232 may be implemented by using an analog device (for example, an amplifier) or a digital device (for example, a digital signal processor). Therefore, the signal processing module 232 may perform analog-related processing or digital electrical signal processing. The OLT MAC 231 parses the electrical signal that passes through the signal processing module 232, to obtain service data. In a sending direction, the OLT MAC 231 generates the service data, and the signal processing module 232 performs analog-related or digital-related processing on the service data. The laser 235 modulates the service data into the optical signal under control of the OLT optical PHY 233, and sends, to the ONU 210 through an optical fiber, a downlink optical signal carrying the service data. The OLT 230 may further include a wavelength division multiplexer 236, configured to: send a downlink optical signal generated by the laser 235 to an optical fiber, and send an uplink optical signal received from the optical fiber to the photoelectric detector 234.

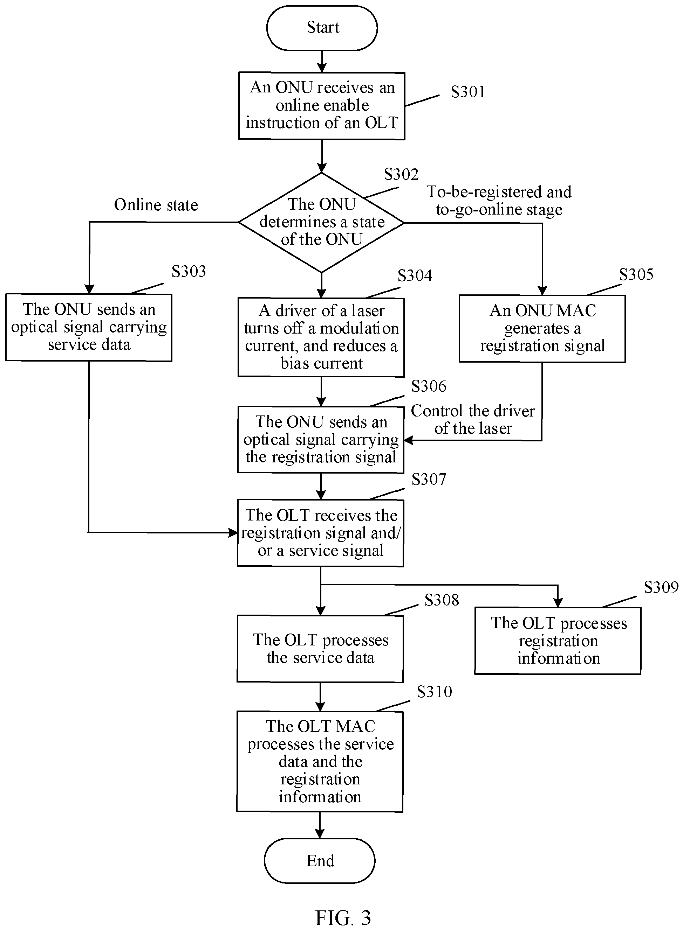

The OLTs periodically deliver an online enable instruction, to instruct an offline ONU to register. FIG. 3 is an example flowchart of a PON system registration method according to an embodiment of this application.

As shown in FIG. 3, the method includes steps performed by an ONU:
S301: The ONU receives an online enable instruction of an OLT, and responds to the online enable instruction of the OLT based on a state of the ONU. S302: The ONU determines the state of the ONU. If the ONU is in an online state, the ONU performs S303: The ONU may send, according to a slot allocated by the OLT, an optical signal (or referred to as a service signal) carrying service data. If the ONU is in a to-be-registered and to-go-online stage, the ONU needs to start a registration procedure. The registration procedure of the ONU includes: S304: A laser turns off a modulation current, and reduces a bias current to less than a threshold current. S305: An ONU MAC generates registration information, and controls a driver of the laser by using a transmission enable port, to load the registration information into an optical signal generated by the laser. S306: The ONU sends an optical signal carrying the registration information.

The method further includes steps performed by the OLT:
S307: The OLT receives the optical signal, where the optical signal includes a registration signal and/or the service signal. The registration signal carries the registration information, and the service signal carries the service data. If there is an ONU that is in a to-be-registered and to-go-online stage, and there is an ONU that is in an online state, the OLT simultaneously receives a registration signal of the ONU that is in the to-be-registered and to-go-online stage and a service signal of the ONU that is in the online state. If there is only an ONU that is in a to-be-registered and to-go-online stage, the OLT receives the registration signal. If there is only an ONU that is in an online state, the OLT receives the service signal. If the OLT simultaneously receives the service signal and the registration signal, the OLT performs S308 and S309 on the service data and the registration information carried in the two signals respectively. S308: The OLT processes the service data. S309: The OLT processes the registration information. S310: The OLT MAC processes the service data and the registration information.

In this embodiment of this application, the service data may be an original data flow or an electrical signal. The service signal may be an optical signal on which the service data is modulated. The registration information may be an electrical signal. The registration signal may be an optical signal on which the registration information is modulated.

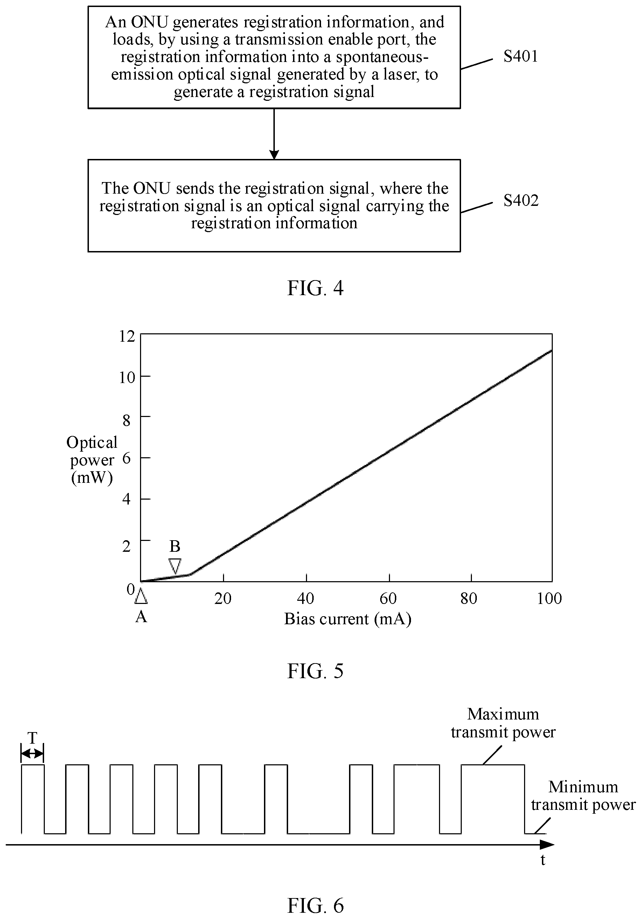

FIG. 4 is an example flowchart of an ONU registration method according to an embodiment of this application. As shown in FIG. 4, the method may include the following steps.

S401: An ONU generates registration information, and loads, by using a transmission enable port, the registration information into a spontaneous-emission optical signal generated by a laser, to generate a registration signal.

The ONU may be an ONU that is in a to-be-registered and to-go-online stage (that is, in a to-be-activated state or is offline). First, a physical parameter of the laser in the ONU is configured. Generally, the laser is driven by a current. Therefore, the physical parameter that can be configured for the laser includes a bias current and a modulation current. If the laser is driven by a voltage, a configurable physical parameter of the laser may alternatively be a bias voltage and a modulation voltage. For example, in FIG. 2A and FIG. 2B, the ONU MAC 211 sends a physical parameter adjustment instruction to the ONU optical PHY 212 by using the transmission control port, to instruct adjustment a physical parameter of the laser 213. For example, the physical parameter adjustment instruction instructs the laser 213 to decrease the bias current, so that the bias current of the laser 213 is less than the threshold current. The physical parameter adjustment instruction further instructs the laser 213 to turn off the modulation current. In other words, the modulation current is set to zero. In addition, in the process of adjusting the bias current of the laser, to prevent the laser from emitting light abnormally, the ONU MAC 211 disables the transmission enable port. The threshold current is a fixed parameter of the laser, and may be set when the laser is delivered from delivery. The bias current provides direct current power of the laser. When the bias current is greater than or equal to the threshold current, the optical signal generated by the laser is a stimulated-emission optical signal, which is generally applicable to a scenario in which a service signal is sent. When the bias current is lower than the threshold current, the optical signal generated by the laser is a spontaneous-emission optical signal. This embodiment of this application is applicable to a scenario in which a registration signal is sent. Optical power of the spontaneous-emission optical signal is generally lower than optical power of the stimulated-emission optical signal. Therefore, power of the registration signal is lower than power of the service signal. The modulation current provides a gain of an alternating current signal. Generally, when the service data is modulated into the service signal by using a data port, the modulation current is set to a value other than zero. However, in this embodiment of this application, the registration information is loaded, by using the transmission enable port, into the optical signal generated by the laser 213, instead of being loaded by using the data port. Therefore, the modulation current can be turned off (in other words, the modulation current can be set to zero). Turning off the modulation current can also prevent the modulation current from being superimposed on the laser, so that output optical power of the laser fluctuates.

FIG. 5 is a schematic diagram of a relationship curve between a bias current and optical power of a laser according to an embodiment of this application. As shown in FIG. 5, when the bias current is zero, the optical power generated by the laser is zero (point A in the figure). When the bias current is greater than zero and less than the threshold current, the laser generates a low-power spontaneous-emission optical signal (between points A and B in the figure, excluding point A). In this embodiment of this application, in an ONU registration process, an OLT does not need to open a silence window (that is, zero window opening), and impact of a registration signal on a service signal needs to be reduced as much as possible. Therefore, the bias current is adjusted to be less than a threshold current, to send a low-power optical signal (spontaneous-emission optical signal).

The ONU MAC 211 generates uplink registration information, where the registration information may be an electrical signal. FIG. 6 is a schematic diagram of a waveform of ONU registration information according to an embodiment of this application. As shown in FIG. 6, a waveform diagram of registration information may be described by using a maximum transmit power, a minimum transmit power, and a frequency (or a period T, where the frequency is a reciprocal of the period T). The registration information may include binary bits, and is represented by a maximum transmit power, a minimum transmit power, and a frequency. For example, a binary sequence represented by a waveform diagram shown in FIG. 6 is " 101010101001000101101110". When the registration information is bit 0, the registration information corresponds to the minimum transmit power. When the registration information is bit 1, the registration information corresponds to the maximum transmit power. A quantity of bits sent in a unit time corresponds to the frequency. The registration information may include one or more of an ONU identification number, an ONU sequence number, a registration number, and the like. In addition, the registration information may further include a single-frequency sequence (for example, the first 10 bits " 1010101010" of the foregoing binary sequence), to indicate a frame header of the registration information. After a stable physical parameter is set for the laser 213, the ONU MAC 211 sends the registration information to the ONU optical PHY 212 by using the transmission enable port, and the ONU optical PHY 212 controls enabling and disabling of the laser based on the registration information, to generate a registration signal. The registration signal may be an optical signal carrying the registration information. For example, the ONU MAC 211 controls, according to the waveform diagram of registration information shown in FIG. 6 by using the transmission enable port, the ONU optical PHY 212 to generate an enable/disable signal, to control the laser 213 to be periodically enabled and disabled. In the waveform diagram, the maximum transmit power (for example, the registration information being bit 1) corresponds to the enabling of the laser, and the minimum transmit power (for example, the registration information being bit 0) corresponds to the disabling of the laser. Alternatively, the registration information being bit 1 corresponds to the disabling of the laser, and the registration information being bit 0 corresponds to the enabling of the laser. Therefore, the enabling and the disabling of the laser 213 are implemented under control of the waveform diagram of registration information shown in FIG. 6, so that the registration information is loaded into the optical signal generated by the laser. The ONU loads the registration information to the optical signal generated by the laser by using the transmission enable port, to generate the registration signal. The transmission enable port may be a designated port (for example, Tx_En) in the ONU MAC 211, or may be implemented by using an idle port or a reserved port in the ONU MAC 211. Because the bias current of the laser is set to be less than the threshold current, the optical signal generated by the laser is a spontaneous-emission optical signal. Therefore, the registration signal may be implemented by using the spontaneous-emission optical signal of the laser

S402: The ONU sends the registration signal, where the registration signal is an optical signal carrying the registration information.

A registration signal of the ONU in the registration and going-online stage and a service signal of the ONU in the online state may be sent by using optical signals with a same wavelength, or may be sent by using optical signals with different wavelengths.

According to the ONU registration method provided in this embodiment of this application, a delay jitter problem caused by opening a silence window can be avoided, and a registration signal is sent at low costs.

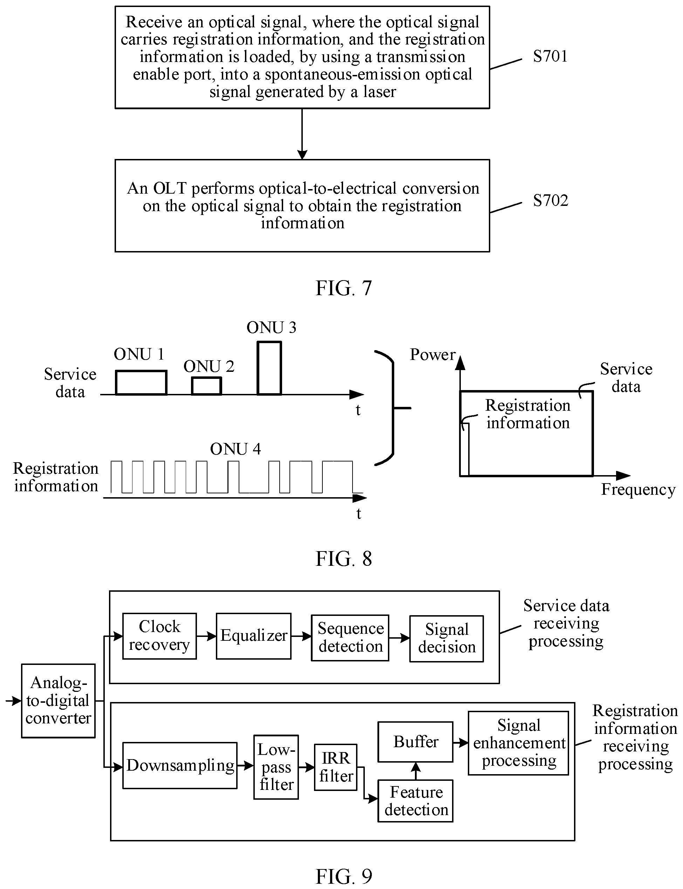

FIG. 7 is an example flowchart of an OLT registration method according to an embodiment of this application. As shown in FIG. 7, the method may include the following steps.

S701: An OLT receives an optical signal, where the optical signal carries registration information, and the registration information is loaded, by using a transmission enable port, into an optical signal generated by a laser

The optical signal received by the OLT includes a registration signal of one or more ONUs (first ONUs), and may alternatively include a service signal of another ONU (a second ONU). The registration signal may be an optical signal carrying the registration information. The service signal may be an optical signal carrying service data. Power of the registration signal is lower than power of the service signal. Therefore, the optical signal received by the OLT may carry one or both of the registration information and the service data. The registration information may be loaded, by using the transmission enable port, into a spontaneous-emission optical signal generated by the laser (first laser) of the ONU, as shown in S401 in FIG. 4. The service information may be loaded, by using the data port, into a stimulated-emission optical signal generated by the laser (second laser) of the ONU.

S702: The OLT performs optical-to-electrical conversion on the optical signal to obtain the registration information.

When the optical signal received by the OLT includes the registration signal, a receiver (the photoelectric detector 234 shown in FIG. 2A and FIG. 2B) of the OLT converts the received optical signal into an electrical signal, and parses the electrical signal to obtain the registration information. In comparison with the service signal, the registration signal has features of low power and low rate (or referred to as a low frequency). Therefore, when the registration signal and the service signal are received by the OLT at the same time, the OLT may separately process the registration signal and the service signal based on different features of the two signals. FIG. 8 is a schematic diagram of signal superimposing of registration information and service data according to an embodiment of this application. As shown in FIG. 8, the OLT receives service data from ONU 1, ONU 2, and ONU 3, and registration information from ONU 4 at the same time. According to a signal power spectrum received by the OLT, power in the registration information is lower than power of the service data, and a frequency of the registration information is lower than a frequency of the service data. When the optical signal received by the OLT includes both a registration signal and a service signal, a receiver (the photoelectric detector 234 shown in FIG. 2A and FIG. 2B) of the OLT converts the received optical signal into an electrical signal, parses the electrical signal, and obtains the registration information and the service data based on different features of the two signals. For example, in FIG. 2A and FIG. 2B, the registration information and the service data may be first processed by the signal processing module 232, and then processed by the OLT MAC 231. Alternatively, the service data is first processed by the signal processing module 232, and then processed by the OLT MAC 231, and the registration information may be directly processed by the OLT MAC 231, without being processed by the signal processing module 232.

The signal processing module 232 may be implemented by using an optical digital signal processor (optical digital signal processor, oDSP), and the oDSP may separately process the service signal and the registration signal. FIG. 9 is a schematic diagram of a logical structure of an oDSP according to this application. As shown in FIG. 9, because the oDSP is a digital chip, an analog-to-digital converter is added before the oDSP to convert an analog electrical signal into a digital electrical signal. The digital electrical signal may include service data and registration information. The service data may be processed by one or more functions or modules such as clock recovery, an equalizer, sequence detection, and signal decision. The registration information is processed by one or more functions or modules such as downsampling, a low-pass filter, an IIR filter, feature detection, a buffer, and signal enhancement processing. A function of the feature detection and the signal enhancement processing is to extract the registration information. The feature detection is used for identifying a single-frequency sequence in the registration information, that is, identifying a frame header of the registration information. When the feature detection identifies the frame header of the registration information, the signal enhancement processing is indicated to be enabled. The registration information is periodically superimposed, so that a signal is enhanced. Therefore, the service data may be removed as noise, to obtain registration information with high signal strength. After the registration information is processed, the signal enhancement processing may be disabled, to reduce power consumption of the oDSP. The oDSP receives and processes the service information and registration information to avoid a loss of sensitivity of a service signal and a registration signal caused by optical splitting.

According to the OLT registration method provided in this embodiment of this application, a registration signal can be received at low costs, and a delay jitter problem caused by opening a silence window can be avoided.

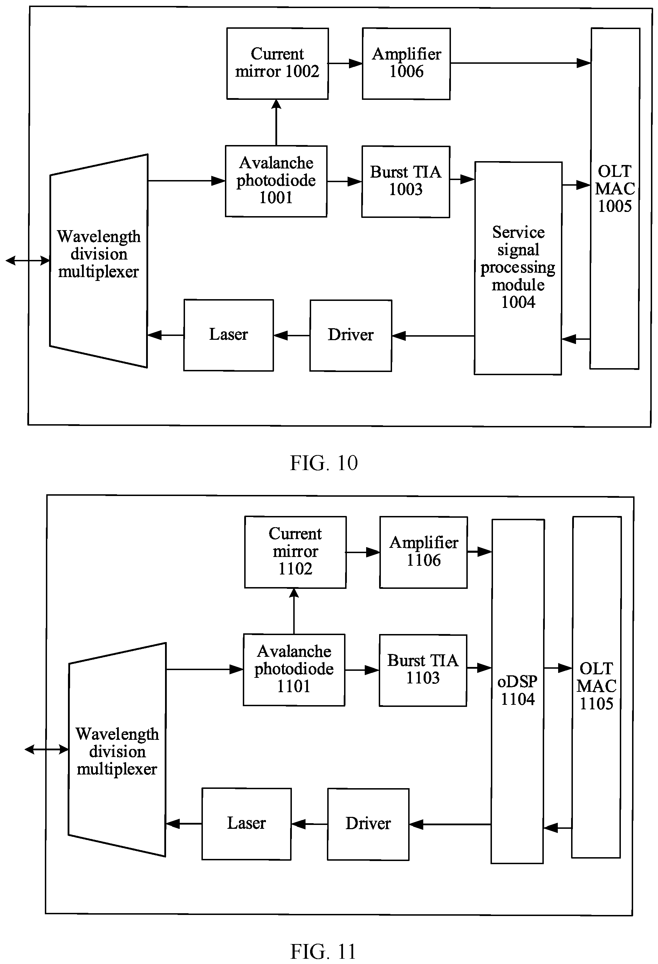

FIG. 10 is a schematic diagram of a structure of an OLT according to an embodiment of this application. As shown in FIG. 10, a photoelectric detector may be implemented by using an avalanche photodiode (avalanche photodiode, APD) 1001, and a current mirror 1002 is used to provide a high bias voltage for the APD. For example, the current mirror provides a bias voltage of 20 V to 40 V The APD 1001 performs optical-to-electrical conversion on the received optical signal to obtain an electrical signal. In this embodiment, an example in which the electrical signal includes registration information and service data is used for description. The electrical signal including the registration information and the service data is replicated by the current mirror 1002, to obtain two channels of electrical signals. One channel of electrical signal is output by the APD 1001 for extracting the service data. The electrical signal used for extracting the service data passes through a burst TIA 1003 and a service signal processing module 1004, and then enters OLT MAC 1005 for data parsing. Functions of the service signal processing module 1004 are similar to the functions of the signal processing module 232 in FIG. 2A and FIG. 2B, and functions of the OLT MAC 1005 are similar to the functions of the OLT MAC 231 in FIG. 2A and FIG. 2B. Details are not described herein again. Another channel of electrical signal replicated by the current mirror 1002 is used for extracting the registration information. The electrical signal used for extracting the registration information passes through the current mirror 1002 and an amplifier 1006, and then is received by the OLT MAC 1005. The OLT MAC 1005 may extract the registration information, and functions of the OLT MAC 1005 are similar to the functions of the feature detection and the signal enhancement processing in FIG. 9. Details are not described herein again. The amplifier 1006 may include one or more amplifiers such as a trans-impedance amplifier (trans-impedance amplifier, TIA) and a clipping amplifier (clipping amplifier, LA). The current mirror replicates a photocurrent generated by the APD, and generates a mirror photocurrent. For example, according to a 4:1 replication ratio, 1/4 of a photocurrent that is replicated from the photocurrent generated by the APD is a mirror photocurrent. The mirror photocurrent is converted into a voltage signal by a low-speed and high-gain trans-impedance amplifier (trans-impedance amplifier, TIA). The voltage signal is further amplified by the clipping amplifier (clipping amplifier, LA). The TIA is designed to convert a weak mirror photocurrent into a voltage signal. To suppress noise, a passing gain is not excessively large. The LA is designed to implement two-stage amplification, so that an output level of the voltage signal reaches the decision standard of the OLT MAC 1005, and an optimal sampling point for the recovery decision of a clock and data recovery (clock and data recovery, CDR) function is provided. In some cases, if a requirement on recovery performance of the registration information is not high, only one-stage amplification may be used, that is, only the TIA or the LA may be used. FIG. 9 further shows a laser, a driver (or referred to as an OLT optical PHY), and a wavelength division multiplexer. For details, refer to related descriptions in FIG. 2A and FIG. 2B. Details are not described herein again. In this embodiment of this application, after passing through the current mirror and the amplifier, the registration information does not need to be processed by a signal processing module such as the oDSP, and directly enters the OLT MAC for processing. An implementation solution is simple, and costs are reduced.

FIG. 11 is a schematic diagram of a structure of another OLT according to an embodiment of this application. A difference from FIG. 10 lies in that an oDSP 1104 is used to replace the service signal processing module 1004. Both registration information and service data are processed by the oDSP 1104, and then enter OLT MAC 1105 for processing. An APD 1101 performs optical-to-electrical conversion on the received optical signal to obtain an electrical signal. Similarly, an example in which the electrical signal includes the registration information and the service data is used for description. The service data passes through a burst TIA 1103, and then enters the oDSP 1104 for processing. After passing through a current mirror 1102 and an amplifier 1106, the registration information enters the oDSP 1104 for processing. The service data and the registration information processed by the oDSP 1104 enter the OLT MAC 1105 for processing separately. In this embodiment of this application, the registration information is processed by a signal processing module such as the oDSP, so that performance of receiving a registration signal can be improved.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A registration signal sending method, wherein the method comprises:
generating registration information, and loading, by using a transmission enable port, the registration information into a spontaneous-emission optical signal generated by a laser, to generate a registration signal; and
sending the registration signal, wherein the registration signal is an optical signal carrying the registration information.

2. The method according to claim 1, wherein the method further comprises:
setting a bias current of the laser to less than a threshold current, so that the laser generates a spontaneous-emission optical signal, wherein the threshold current is a preset current value.

3. The method according to claim 1 or 2, wherein the method further comprises:
setting a modulation current of the laser to zero.

4. The method according to any one of claims 1 to 3, wherein the loading, by using a transmission enable port, the registration information into a spontaneous-emission optical signal generated by a laser comprises:
controlling enabling and disabling of the laser based on the registration information by using the transmission enable port, so that the registration information is loaded into the spontaneous-emission optical signal generated by the laser.

5. The method according to any one of claims 1 to 4, wherein the registration information comprises a first bit and a second bit in binary; and when the registration information comprises the first bit, the laser is controlled to be enabled by using the transmission enable port; or when the registration information comprises the second bit, the laser is controlled to be disabled by using the transmission enable port.

6. The method according to any one of claims 1 to 5, wherein power of the registration signal is lower than power of a service signal.

7. A registration signal reception method, wherein the method comprises:
receiving an optical signal, wherein the optical signal carries registration information, and the registration information is loaded, by using a transmission enable port, into a spontaneous-emission optical signal generated by a first laser; and
performing optical-to-electrical conversion on the optical signal to obtain the registration information.

8. The method according to claim 7, wherein the optical signal further carries service data, and the service data is loaded, by using a data port, into a stimulated-emission optical signal generated by a second laser.

9. The method according to claim 8, wherein after the performing optical-to-electrical conversion on the optical signal, the method further comprises:
obtaining an electrical signal, wherein the electrical signal comprises the registration information and the service data; and
extracting the registration information from the electrical signal.

10. The method according to claim 8 or 9, wherein power of the optical signal carrying the registration information is lower than power of the optical signal carrying the service data.

11. An optical transmission apparatus, wherein the apparatus comprises:
a processor, configured to: generate registration information, and load, by using a transmission enable port, the registration information into a spontaneous-emission optical signal generated by a laser, to generate a registration signal; and
a laser, configured to send the registration signal, wherein the registration signal is an optical signal carrying the registration information.

12. The apparatus according to claim 11, wherein the processor is further configured to:
set a bias current of the laser to less than a threshold current, so that the laser generates a spontaneous-emission optical signal, wherein the threshold current is a preset current value.

13. The apparatus according to claim 11 or 12, wherein the processor is further configured to:
set a modulation current of the laser to zero.

14. The apparatus according to any one of claims 11 to 13, wherein the apparatus further comprises a driver, and the driver is configured to:
control enabling and disabling of the laser based on the registration information, so that the registration information is loaded into the spontaneous-emission optical signal generated by the laser.

15. The apparatus according to claim 14, wherein the registration information comprises a first bit and a second bit in binary; and
the driver is configured to: when the registration information comprises the first bit, control the laser to be enabled; or when the registration information comprises the second bit, control the laser to be disabled.

16. The apparatus according to any one of claims 11 to 15, wherein power of the registration signal is lower than power of a service signal.

17. An optical reception apparatus, comprising:
an interface, configured to receive an optical signal, wherein the optical signal carries registration information, and the registration information is loaded, by using a transmission enable port, into a spontaneous-emission optical signal generated by a first laser; and
an optical-to-electrical converter, configured to perform optical-to-electrical conversion on the optical signal to obtain the registration information.

18. The apparatus according to claim 17, wherein the optical signal further carries service data, and the service data is loaded, by using a data port, into a stimulated-emission optical signal generated by a second laser.

19. The apparatus according to claim 18, wherein after the optical-to-electrical conversion is performed on the optical signal, the apparatus further comprises a signal processor, wherein
the signal processor is configured to: obtain an electrical signal, wherein the electrical signal comprises the registration information and the service data; and extract the registration information from the electrical signal.

20. The apparatus according to claim 18 or 19, wherein power of the optical signal carrying the registration information is lower than power of the optical signal carrying the service data.

21. An optical chip, wherein the optical chip is configured to: generate registration information, and load, by using a transmission enable port, the registration information into a spontaneous-emission optical signal generated by a laser, to generate a registration signal, wherein the registration signal is an optical signal carrying the registration information.

22. The optical chip according to claim 21, wherein the optical chip is further configured to perform the method according to any one of claims 2 to 6.

23. A communication system, wherein the system comprises a plurality of optical transmission apparatuses according to any one of claims 11 to 16 and the optical reception apparatus according to any one of claims 17 to 20.
